# DEMANDE DE BREVET EUROPEEN

(11) **EP 1 854 707 A1**
(43) Date de publication de la demande: **14.11.2007**
(21) Numéro de dépôt: 07300908.6
(22) Date de dépôt: 30.03.2007
(51) Int. Cl.: B62D 27/02, B62D 29/00

(54) **Elément de liaison pour réaliser un longeron pour véhicule automobile et longeron comportant un tel élément**

(30) Priorité: 12.05.2006 FR 0651714
(71) Demandeur: RENAULT S.A.S., 92100 Boulogne Billancourt (FR)
(72) Inventeur: Hlubina, Thierry, 92370 Chaville (FR); Chavaux, François Xavier, 78330 Fontenay le fleury (FR)

(57) **Abrégé**

La présente invention a principalement pour objet un raccord (10) pour lier deux demi longerons (8.1, 8.2) de manière à former un longeron (8) de véhicule, notamment un longeron avant. Le raccord (10) comporte deux cavités axialement opposées, destinées à recevoir une extrémité proximale (8.1.2, 8.2.2) de chaque demi longeron (8.1, 8.2), le raccord (10) étant réalisé d'une seule pièce, par exemple par moulage.

La présente invention a également pour objet un procédé de fabrication de longerons selon la présente invention.

## Description

### DOMAINE TECHNIQUE ET ART ANTÉRIEUR

La présente invention se rapporte à un élément de liaison ou de raccordement, permettant de réaliser des longerons formés de plusieurs parties pour véhicule automobile, notamment des longerons avant. La présente invention se rapporte également à des longerons comportant un tel élément de liaison et à un véhicule automobile comportant de tels longerons.

De manière habituelle, un véhicule automobile comporte un châssis et une carrosserie. Le châssis comporte une caisse délimitant l'habitacle, des traverses avant et arrière et des longerons avant et arrière reliant les traverses avant et arrière respectivement à la caisse.

La traverse avec les longerons avant forment le bloc avant, qui est destiné à supporter le moteur.

Les longerons avant sont destinés à recevoir des chocs avant, et à se déformer pour les absorber.

Il est connu du document US 5 399 046, de réaliser des longerons en deux parties, un demi longeron avant et un demi longeron arrière reliés par un élément de liaison. L'élément de liaison est formé de deux coquilles entourant une extrémité de chaque demi longeron et soudées aux demi longerons.

Afin de fabriquer le longeron, les deux demi longerons sont alignés axialement et mis en contact par une de leurs extrémités longitudinales, les deux coquilles sont ensuite mises en place autour de l'interface et soudées à celles-ci.

Le procédé de fabrication est long et complexe, puisqu'il comporte une étape d'alignement des deux demi longerons, et une étape de mise en place des deux coquilles

En outre, les deux parties formant l'élément de liaison sont de forme relativement complexe.

C'est par conséquent un but de la présente invention d'offrir un longeron, notamment un longeron avant pour véhicule automobile de fabrication simple.

### EXPOSÉ DE L'INVENTION

Le but précédemment énoncé est atteint par un élément de liaison d'une seule pièce comportant deux cavités axialement opposées, destinées à recevoir chacune une extrémité d'un demi longeron.

Ainsi, il n'est plus nécessaire d'aligner les demi longerons avant leur assemblage, l'alignement étant obtenu automatiquement par insertion des extrémités des demi longerons dans l'élément de liaison.

En outre, cet élément de liaison est formé d'une pièce unique, sa mise en place et sa manipulation sont alors plus aisées. En outre, la gestion des stocks est simplifiée, puisqu'il n'existe plus qu'une seule référence par modèle de longeron à fabriquer.

La présente invention a par conséquent principalement pour objet un élément de liaison pour fabriquer un longeron pour véhicule automobile, ledit longeron comportant deux demi longerons, ledit élément de liaison d'axe longitudinal comportant des cavités axialement opposées destinées à recevoir chacune une extrémité d'un demi longeron, et étant réalisé d'une seule pièce.

De manière particulièrement avantageuse, les cavités sont délimitées axialement par des bords disposés dans des plans décalés axialement.

Il peut être prévu qu'une cavité ait une plus grande section transversale relativement à la section de l'autre cavité, de manière à permettre la réalisation d'un longeron comportant un demi longeron de plus grande section transversale et un demi longeron de plus petite section transversale.

La surface extérieure de l'élément de liaison selon l'invention peut comporter des nervures de rigidification axiales.

L'élément de liaison peut être réalisé par moulage, par exemple en alliage d'aluminium.

La présente invention a également pour objet un longeron pour véhicule automobile comportant deux demi longerons et un élément de liaison selon la présente invention.

Les demi longerons sont avantageusement soudés sur l'élément de liaison.

Le longeron selon l'invention comporte avantageusement un demi longeron de plus grande section transversale et un demi longeron de plus petite section transversale.

Les demi longerons peuvent être réalisés par extrusion et en alliage d'aluminium.

La présente invention a également pour objet un procédé de fabrication d'un longeron selon la présente invention, comportant les étapes :
- d'insertion d'une extrémité axiale d'un premier demi longeron dans une première cavité d'un élément de liaison,
- d'insertion d'une extrémité axiale d'un deuxième demi longeron dans une deuxième cavité de l'élément de liaison,
- de soudage des demi longerons sur l'élément de liaison.

La présente invention a également pour objet un procédé de réparation d'un longeron selon la présente invention, dont au moins un demi longeron est déformé, comportant les étapes :
- retrait de la soudure entre ledit demi longeron déformé et l'élément de liaison,
- de retrait du demi longeron déformé,
- de mise en place dans le raccord d'un demi longeron non déformé,
- de soudage dudit demi longeron sur l'élément de liaison.

### BRÈVE DESCRIPTION DES DESSINS

La présente invention sera mieux comprise à l'aide de la description qui va suivre, dans laquelle l'avant et l'arrière sont respectivement la gauche et la droite des dessins annexés, sur lesquels :
- la figure 1 est une vue en perspective d'une partie d'un châssis selon la présente invention,

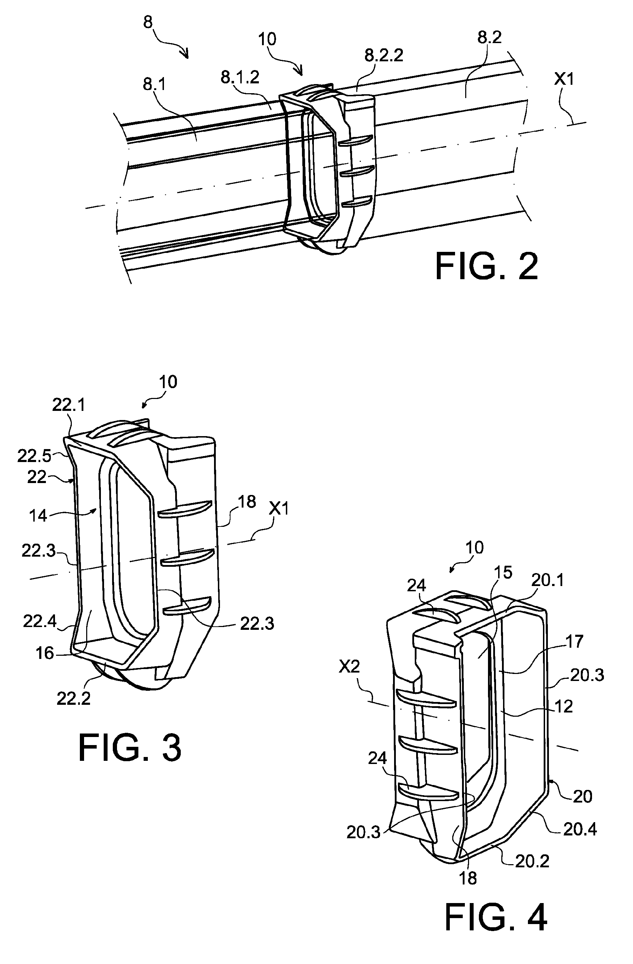

- la figure 2 est une vue agrandie d'un longeron selon la présente invention,
- la figure 3 est une vue en perspective avant d'un élément de liaison selon la présente invention,
- la figure 4 est une vue en perspective arrière d'un élément de liaison selon la présente invention,
- la figure 5 est une vue de côté d'un élément de liaison selon la présente invention.

### EXPOSÉ DÉTAILLÉ DE MODES DE RÉALISATION PARTICULIERS

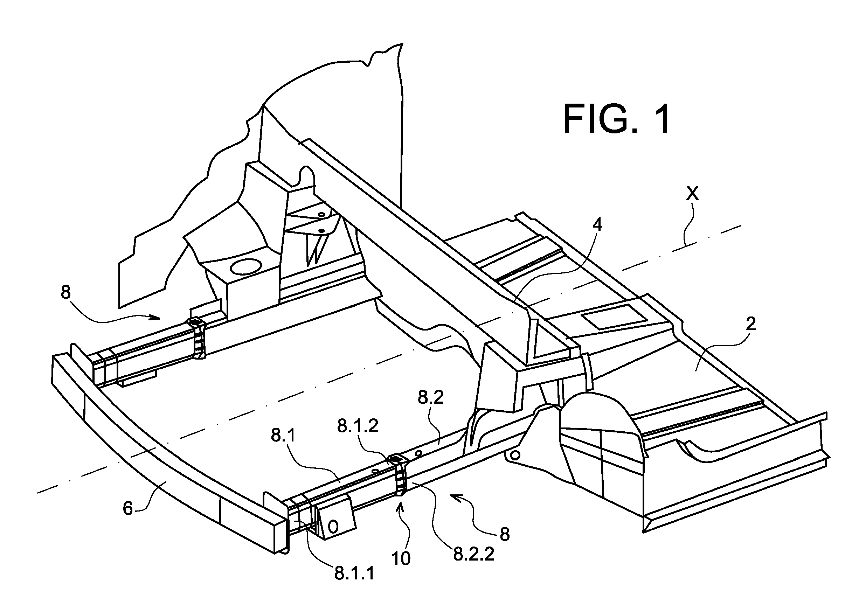

Sur la figure 1, on peut voir un exemple de réalisation d'un châssis pour véhicule automobile mettant en oeuvre la présente invention.

Le châssis comporte un plancher 2, un tablier 4, une traverse avant 6 et un premier et un deuxième longeron 8. Les longerons 8 s'étendent sensiblement selon un axe longitudinal X du véhicule, depuis le plancher 2 vers une extrémité avant du véhicule. La traverse avant 6 est rendue solidaire des extrémités avant du longeron 8.

Dans la suite de la description, nous décrirons un seul longeron 8, les deux longerons étant semblables. Selon la présente invention, le longeron 8 comporte un demi longeron avant 8.1 et un demi longeron arrière 8.2.

Le demi longeron avant 8.1 est fixé par une extrémité 8.1.1 à la traverse avant 6 et le demi longeron arrière 8.2 est fixée au plancher 2.

Le longeron 8 comporte également une pièce de liaison ou un raccord 10 pour maintenir ensemble le premier et le deuxième demi longeron 8.1, 8.2 pour former un pièce unitaire.

On désignera dans la présente demande, par « extrémité proximale d'un demi longeron », l'extrémité du demi longeron montée dans le raccord.

Le raccord 10 d'axe X1, comporte une première cavité 12 et une deuxième 14 cavité axialement opposées, destinées à recevoir respectivement une extrémité proximale 8.2.2 du demi longeron arrière 8.2 et une extrémité proximale 8.1.2 du demi longeron avant 8.1.

Le raccord 10 a une section transversale sensiblement rectangulaire, et les cavités 12, 14 sont de forme intérieure correspondante à celle des extrémités proximales 8.2.2 et 8.1.2.

La forme des cavités est adaptée à la forme des demi longerons ; ainsi si les demi longerons ont par exemple une section circulaire, les cavités auront une section adaptée à recevoir une telle section ,par exemple carrée, hexagonal ou circulaire.

De manière avantageuse, le raccord 10 est évidé de manière à réduire sa masse, ainsi les cavités 12, 14 communiquent par leur fond, de sorte qu'un passage de communication 15 est créé entre les deux cavités 12, 14.

Une surface annulaire 17 borde avantageusement le passage de communication 15 entre les deux cavités 12,14, formant une surface de butée axiale pour les extrémités proximales 8.2.2, 8.1.2 des demi longerons 8.2, 8.1.

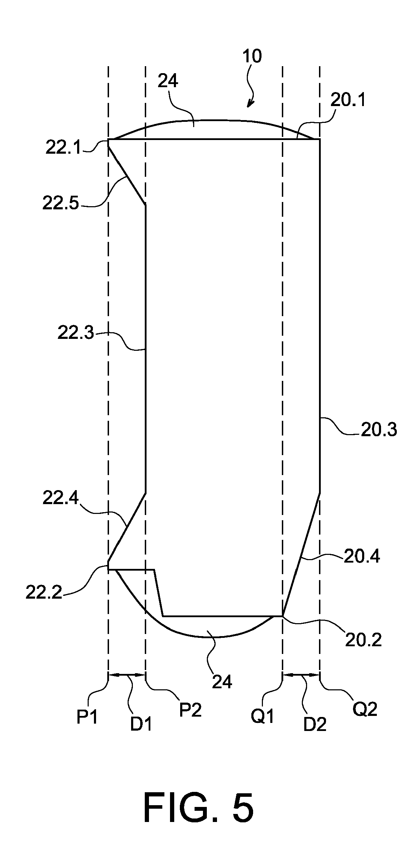

Chacune des cavités 12, 14 est délimitée par une paroi latérale 16, 18, dont le rebord axial 20, 22 est avantageusement réparti dans des plans décalés axialement, ce qui est particulièrement visible sur la figure 5.

Dans l'exemple représenté, pour la cavité 12, le bord supérieur 20.1 et le bord inférieur 20.2 sont contenus dans un plan Q1 ; les bords gauche et droit 20.3 sont contenus dans un plan Q2 ; le bord inférieur 20.2 se raccorde aux bords gauche et droit par des bords inclinés 20.4 vers le haut de l'avant vers l'arrière. Les plans Q1, Q2 sont sensiblement parallèles.

Dans le cas de la cavité 14, les bords inférieur 22.2 et supérieur 22.1 sont contenus dans un plan P1, les bords 22.3 gauche et droit sont contenus dans un plan P2. Le bord inférieur 22.2 se raccorde aux bords 22.3 gauche et droit par des bords inclinés 22.4 vers le haut de l'avant vers l'arrière ; le bord supérieur 22.1 se raccorde aux bords gauche et droit 22.3 par des bords 22.5 inclinés vers le bas de l'avant vers l'arrière. Les plans P1 et P2 sont sensiblement parallèles.

Cette répartition dans plusieurs plans Q1, Q2, P1, P2 décalés selon l'axe X1, permet de répartir les soudures entre le raccord et les demi longerons dans des plans différents, ce qui permet de minimiser l'effet dit de ZAT (Zones Anormalement Déformées), c'est-à-dire les zones subissant d'importantes déformations lors des chocs. En effet, du fait de ce décalage axial des soudures, l'épaisseur du raccord 10 va absorber sur une longueur axiale D1 entre les plans P1 et P2, et D2 entre les plans Q1 et Q2, la déformation importante de l'extrémité arrière 8.1.2 du demi longeron avant 8.1. Les risques d'apparition de ces zones anormalement déformées sont alors réduits, puisqu'une partie de la force du choc est reprise par le raccord 10.

Le raccord 10 comporte avantageusement des nervures axiales 24 pour renforcer axialement le raccord 10. Ces nervures 24 sont avantageusement réparties sur la surface extérieure du raccord 10, pour ne pas gêner l'insertion des extrémités proximales 8.1.2, 8.2.2 des demi longerons 8.1, 8.2

Dans l'exemple représenté, les demi longerons ont une section transversale sensiblement rectangulaire.

Les demi longerons 8.1, 8.2 sont, par exemple réalisés en alliage d'aluminium par extrusion.

Ainsi, grâce à la présente invention, on peut définir une zone de déformation « préprogrammée » formée par le demi longeron avant 8.1. Il peut être conçu pour se déformer préférentiellement en cas de choc frontal à des vitesses comprises entre 15km/h et 40km/h.

Ainsi, lors de la réparation du véhicule, la zone de déformation sera rapidement déterminée et la remise en état du véhicule sera effectuée plus rapidement, par une simplification du démontage du demi longeron avant 8.1 endommagé et une simplification d'un demi longeron avant neuf.

Une telle facilité de réparation,obtenue par l'utilisation d'un raccord 10 selon l'invention, peut également être améliorée par la mise en place d'éléments connus comme une traverse danner et des crash-box, structures absorbant l'ensemble des efforts générés par des chocs frontaux à une vitesse inférieure à 15km/h. Ces éléments étant vissés sur les longerons avant 8, ils sont facilement remplaçables.

De manière avantageuse, le raccord 10 selon la présente invention permet de raccorder deux demi longerons de section différente, en taille et/ou en forme.

Dans l'exemple représenté, le longeron avant 8.1 a une section transversale inférieure à celle du demi longeron arrière 8.2, la cavité 14 a donc une section transversale plus petite que celle de la cavité 12.

En cas de choc avant, c'est donc le demi longeron avant 8.1 qui se déforme préférentiellement. On assure alors une progressivité du choc frontal, c'est le demi longeron avant 8.1 qui se déforme en premier, puis le demi longeron arrière 8.2.

Il est prévu de souder les demi longerons 8.1, 8.2 sur le raccord 10, par exemple par la réalisation d'un cordon de soudure ou au moyen d'une soudure par point.

Le raccord 10 est avantageusement réalisé par moulage, par exemple en alliage d'aluminium.

Nous allons maintenant décrire un procédé de fabrication d'un longeron selon la présente invention.

Le procédé de fabrication d'un longeron selon la présente invention comporte les étapes :
- de mise en place de l'extrémité proximale d'un demi longeron dans une cavité du raccord,
- de mise en place d'une extrémité proximale de l'autre demi longeron dans l'autre cavité du raccord,
- d'une réalisation d'une soudure entre chaque demi longeron et le raccord.

La soudure de chaque demi longeron sur le raccord peut avoir lieu juste après la mise en place de son extrémité proximale dans le raccord, il n'est pas nécessaire d'attendre la mise en place des deux demi longerons.

Grâce à la présente invention, le procédé de fabrication est simplifié. Il n'est plus nécessaire d'aligner les deux demi longerons. En outre, la manipulation du raccord est rendue plus simple du fait de son unicité.

La réparation du châssis est également simplifiée. En effet, grâce à la présente invention, en cas de déformation d'une partie du longeron, notamment du fait d'un choc, il est aisé de remplacer le demi longeron détérioré. Pour cela de retirer le demi longeron de la cavité du raccord, dans le cas où le demi longeron est soudé au raccord, les soudures entre le demi longeron concerné et le raccord 10 sont supprimées, d'introduire un demi longeron non déformé dans ladite cavité et de souder le demi longeron sur le raccord.

## Revendications

1. Elément de liaison pour fabriquer un longeron pour véhicule automobile, ledit longeron (8) comportant deux demi longerons (8.1, 8.2), ledit élément de liaison (10) d'axe longitudinal (X1) comportant des cavités (12, 14) axialement opposées destinées à recevoir chacune une extrémité (8.2.2, 8.1.2) d'un demi longeron (8.2, 8.1), et étant réalisé d'une seule pièce, lesdites cavités (12, 14) étant délimitées axialement par des bords (20.1, 20.2, 20.3, 22.1, 22.2, 22.3) disposés dans des plans (Q1, Q2, P1, P2) décalés axialement.

2. Elément de liaison selon la revendication 1, comportant un passage de communication (15) entre les cavités (12, 14).

3. Elément de liaison selon la revendication 1 ou2, dans lequel une cavité (12) a une plus grande section transversale relativement à la section de l'autre cavité (14), de manière à permettre la réalisation d'un longeron comportant un demi longeron (8.2) de plus grande section transversale et un demi longeron (8.1) de plus petite section transversale.

4. Elément selon l'une quelconque des revendications 1 à 3, comportant des nervures (24) de rigidification axiales sur sa surface extérieure.

5. Longeron pour véhicule automobile comportant deux demi longerons (8.1, 8.2) et un élément de liaison (10) selon l'une des revendications précédentes.

6. Longeron selon la revendication précédente, dans lequel les demi longerons (8.1, 8.2) sont soudés sur l'élément de liaison (10).

7. Longeron selon la revendication 5 ou 6 en combinaison avec la revendication 3, dans lequel un demi longeron (8.2) est de plus grande section transversale et un demi longeron (8.1) est de plus petite section transversale.

8. Procédé de fabrication d'un longeron selon l'une quelconque des revendications 5 à 7, comportant les étapes :
- d'insertion d'une extrémité axiale d'un premier demi longeron dans une première cavité d'un élément de liaison,
- d'insertion d'une extrémité axiale d'un deuxième demi longeron dans une deuxième cavité de l'élément de liaison,
- de soudage des demi longerons sur l'élément de liaison.

9. Procédé de réparation d'un longeron selon l'une quelconque des revendications 5 à 7, dont au moins un demi longeron est déformé, comportant les étapes :
- de retrait de la soudure entre ledit demi longeron déformé et l'élément de liaison,
- de retrait du demi longeron déformé,
- de mise en place dans l'élément de liaison d'un demi longeron non déformé.
- de soudage dudit demi longeron sur l'élément de liaison.
